# EUROPÄISCHE PATENTSCHRIFT

(11) **EP 1 204 313 B1**
(45) Veröffentlichungstag und Bekanntmachung des Hinweises auf die Patenterteilung: **08.01.2003**
(21) Anmeldenummer: 00949280.2
(22) Anmeldetag: 07.07.2000
(51) Int. Cl.: A01N 1/02, A23L 3/015

(54) **VERFAHREN UND VORRICHTUNG ZUR KONSERVIERUNG VON TIER- UND MENSCHENPRÄPARATEN SOWIE MIKROORGANISMEN UND ZUR VERLÄNGERUNG DER LEBENSFÄHIGKEIT VON ZU TRANSPLANTIERENDEN ORGANEN UND KÖRPERTEILEN**
METHOD AND DEVICE FOR PRESERVING ANIMAL AND HUMAN PREPARATIONS AS WELL AS MICROORGANISMS AND FOR PROLONGING THE VIABILITY OF ORGANS AND BODY PARTS TO BE TRANSPLANTED
PROCEDE ET DISPOSITIF POUR CONSERVER DES PREPARATIONS D'ORIGINE ANIMALE ET HUMAINE, AINSI QUE DES MICRO-ORGANISMES, ET POUR AUGMENTER LA LONGEVITE D'ORGANES ET D'ELEMENTS ORGANIQUES TRANSPLANTES

(30) Priorität: 13.07.1999 DE 19932375
(43) Veröffentlichungstag der Anmeldung: 15.05.2002
(73) Patentinhaber: Vivocell GmbH, 45896 Gelsenkirchen (DE)
(72) Erfinder: KLEMM, Bernd, 67663 Kaiserslautern (DE); MELZER, Andreas, D-45478 Mülheim a.d. Ruhr (DE); SCHLEGEL, Jürgen, D-79224 Umkirch (DE)
(74) Vertreter: Maucher, Wolfgang, Dipl.-Ing.
(86) Internationale Anmeldenummer: EP0006430
(87) Internationale Veröffentlichungsnummer: WO01003505

(56) Entgegenhaltungen:
- US-A- 3 772 153
- US-A- 4 837 390
- US-A- 5 475 983
- PEGG D E UND GREEN C J: "Renal Preservation by Hypothermic Perfusion" CRYOBIOLOGY, Bd. 10, Nr. 1, - 1973 Seiten 56-66, XP000943532

## Beschreibung

Die Erfindung betrifft ein Verfahren und eine Vorrichtung zur Konservierung von Tier- und Menschenpräparaten sowie Mikroorganismen oder dergleichen Behandlungsgut, insbesondere für die medizinische Forschung und/oder Ausbildung und zur Verlängerung der Lebensfähigkeit von zu transplantierenden Organen und Körperteilen als Behandlungsgut, wobei aus den Zellen des Behandlungsgutes Kohlendioxid verdrängt wird.

In der medizinischen Ausbildung und Forschung werden Menschen und Versuchstiere bzw. einzelne Körperteile oder Organe benötigt. Dabei besteht das Problem, daß diese Präparate möglichst frisch und ohne Verletzungen auch in größerer Stückzahl und zeitlich unabhängig, also bei Bedarf, zur Verfügung stehen sollen. Das tote Gewebe sollte dabei dem lebenden Gewebe möglichst ähnlich sein, um praxisnahe Ergebnisse zu erhalten. Hierbei ist vor allem die Konsistenz des Gewebes, die Elastizität, Farbe und Form wichtig.
Bisherige Techniken sehen vor, die Präparate in Formalin o.a. einzulegen. Nachteilig ist dabei jedoch, daß sich Farbe und Konsistenz erheblich verändern. Außerdem ist Formalin ein Giftstoff, der das Gewebe chemisch verändert. Damit wird die Funktionsweise der Zellverbände geändert, was für Forschungszwecke erhebliche Nachteile bringt. Außerdem ist wegen der Giftigkeit eine Wiederverwendung nicht möglich, so daß Transplantationen solcher, mit Formalin behandelter Präparate ausgeschlossen ist. Weiterhin besteht die Möglichkeit, die Präparate tiefzufrieren. Beim Auftauen werden dann jedoch die natürlichen Zersetzungsvorgänge aktiviert und beschleunigt, so daß die Präparate innerhalb von Stunden verbraucht werden müssen.

Eine weitere Möglichkeit sieht vor, Frischpräparate zu verwenden. Dazu wird das Tier kurz vorher eingeschläfert. Dies erfordert jedoch einen hohen organisatorischen und finanziellen Aufwand, da das Tierschutzgesetz entsprechende Vorschriften vorgibt wie z.B. Quarantänevorschriften, Sonderentsorgung, Genehmigung der Ethikkommissionen.

Bei der Körperteil-oder Organtransplantation besteht unter anderem ein Transportproblen. Organe müssen zum Teil über tausende von Kilometern vom Spender zum Empfänger trnasportiert werden. Dabei besteht die Gefahr, daß der natürliche Zerfallsprozeß einsetzt. Um diesen zu verlangsamen, wird das Organ gekühlt und teilweise in eine Nährlösung eingelegt. Trotzdem muß das Organ innerhalb von Stunden verwendet werden, bevor es zu dauerhaften Zellschädigungen kommt.

Es ist bereits bekannt, Sauerstoff einzusetzen, um den natürlichen Zerfallsprozeß zu reduzieren.
So sind Veröffentlichungen zu Untersuchungen bekannt, bei denen hyperbarer Sauerstoff bei Überdruck verwendet wird zur besseren Wundheilung.
Weiterhin ist die Transplantation eines Rattenohrs bekannt, bei der hyperbarer Sauerstoff unter einem Druck von zwei bar eingesetzt wurde, mit dem Ziel, das Transplantat besser anwachsen zu lassen.
Bei der Transplantation einer Rattenleber wurde diese mit hyperbarem, hundertprozentigem Sauerstoff bei 2,5 bar Überdruck vor der Entnahme behandelt, um Ischeamie-Schäden (Blutarmut) bei erneutem Durchbluten des Organs zu verringern. Weiterhin ist eine Lungentransplantation bei einem Kaninchen unter Verwendung von EuroCollinslösung (Nährlösung) und 95% Sauerstoff/5% CO2 Atmoshäre bei 2 bar Druck bekannt.
Aus Versuchen ist auch bekannt; daß bei Rattenzellen, die hyperbarem Sauerstoff unter einem Druck von 2,8 bar längere Zeit ausgesetzt wurden, Schädigungen auftraten.
Stand der Technik in der Medizin ist also die Verwendung von hochprozentigem Sauerstoff (95% oder höher) sowie eine Druckbeaufschlagung.
Für die Sauerstoffversorgung werden entweder Sauerstoffflaschen oder ein Sauerstoffkonzentrator eingesetzt. Beides bedeutet bei der Anschaffung und für den praktischen Betrieb einen nicht unerheblichen Kostenaufwand. Beim Einsatz von Sauerstoffflaschen kommt hinzu, daß diese laufend ausgetauscht werden müssen, was den Betrieb der Vorrichtung umständlich macht. Außerdem müssen bei der Handhabung und Lagerung von Sauerstoffflaschen vorgeschriebene Sicherheitsmaßnahmen beachtet werden.

Es besteht daher insbesondere die Aufgabe, ein Verfahren zur Konservierung und Behandlung von Präparaten zu schaffen, mit dessen Hilfe Päparate auch über eine vergleichsweise langen Zeitraum haltbar gemacht werden können, so daß an diesen innerhalb des verlängerten Haltbarkeitszeitraumes unter wirklichkeitsnahen Verhältnissen Operationsübungen vorgenommen werden können. Außerdem soll bei der Organ- oder Körperteiltransplantation die Möglichkeit der verlängerten Lebensfähigkeit geschaffen werden.

Die erfindungsgemäße Lösung dieses Verfahrens besteht insbesondere darin, daß das Präparat oder dergleichen Behandlungsgut innerhalb eines Behälters atmosphärischer Luft mit intervallartig bis wenigstens etwa 10 bar ansteigendem und anschließend nach einem vorgebbaren, je nach dem Behandlungsgut angepaßtem Zeitabschnitt abgesenktem Druck ausgesetzt wird, daß nach dem Absenken des Drucks von außen Luft zugeführt und der Druck bis auf wenigstens etwa 10 bar erhöht wird und daß wenigstens zwei Druckphasen für eine Behandlung vorgesehen sind.
Der Einsatz atmosphärischer Luft in Verbindung mit der intervallartigen Druckbeaufschlagung vereinfacht das Behandlungsverfahren erheblich, weil eine aufwendige Versorgung mit Sauerstoff aus Sauerstoffflaschen oder der Einsatz eines Sauerstoffkonzentrators entfällt. Außerdem kann die Behandlung nach erheblich kürzerer Zeit abgeschlossen werden. Dies resultiert aus der vergleichsweise hohen Druckbeaufschlagung, die nach einer Ausgestaltung der Erfindung 10 bar bis etwa 100 bar betragen kann. Diese hohe Druckbeaufschlagung des Behandlungsgutes bewirkt ein schnelleres Eindiffundieren des Luftsauerstoffes.
Versuche haben gezeigt, daß bereits zwei Druckphasen mit dazwischen liegenden Entlastungen genügen, um eine gute Haltbarkeitsverlängerung zu erreichen.
Die Behandlung mit dem erfindungsgemäßen Verfahren erlaubt Menschen, Tiere und Mikroorganismen oder Teile von ihnen nach ihrem exitus zu konservieren. Üblicherweise setzt die Verwesung innerhalb von Stunden ein. Das erfindungsgemäße Verfahren kann dies bis zu mehreren Wochen hinauszögern. Dabei bleiben Farbe des Gewebes sowie dessen Konsistenz insbesondere hinsichtlich der Festigkeit und Elastizität erhalten, so daß es wie ein Frischpräparat verwendet werden kann. Somit stehen Präparate zur Verfügung, die sehr lebensnah sind und z.B. für Operationskurse bei Bedarf der Konservierungsvorrichtung entnommen werden können. Die Konsistenz des Gewebes ist dabei fast wie Frischgewebe. Dies zeigen physikalische Versuche zur Elastitizät des Gewebes.
Außer den wissenschaftlichen Vorteilen, erleichtert das Verfahren auch die Organisation. Mehrere Präparate können konserviert und bei Bedarf entnommen werden und Versuche können unabhängig von Anlieferung/Schlachtung von Versuchstieren durchgeführt werden. Daraus ergibt sich auch eine finanzielle Ersparnis, zumindest gegenüber Frischpräparatversuchen.
Das Verfahren kann helfen Tierversuche einzusparen, da eine Mehrfachverwendung und Aufbewahrung einzelner Präparate möglich ist.
Die längere Haltbarkeit des vorbehandelten Präparats ist unter anderem auch darauf zurückzuführen, daß bestimmte Keimgruppen durch das Sauerstoffgas in ihrer Entwicklung gehemmt werden. Der in der atmosphärischen Luft enthaltene Sauerstoff wirkt, unter Druck zugeführt, auf die Keime wachstumshemmend und hat eventuell sogar eine bakterizide Wirkung. Durch diese bakterizide Wirkung wird beschleunigten Zersetzungsvorgängen wirksam entgegengewirkt. Darüber hinaus werden über einen längeren Zeitraum auch oxidative Veränderungen verhindert oder zumindest reduziert, was sich in einer wirklichkeitsnahen Fleischfärbung des Tierpräparats bemerkbar macht.
Bei den Tier- und Menschenpräparaten kann es sich sowohl um Teilpräparate als auch um Ganzkörperpräparate handeln.

Bei der Körperteil-oder Organtransplantation steht durch das erfindungsgemäße Verfahren nun eine verlängerte Zeitspanne zur Verfügung, in der nach der Entnahme des Organs dieses zum Transplantationsort gebracht und dort eingesetzt wird, weil die Lebensfähigkeit von Organen und Körperteilen länger erhalten werden kann.
Zweckmäßigerweise wird die Druckbeaufschlagung des Behandlungsgutes einerseits mit hoher und andererseits mit demgegenüber reduzierter Druckbeaufschlagung in unterschiedlich langen Zeitabschnitten vorgenommen, wobei die Hochdruckbeaufschlagung mindestens etwa 1 bis etwa 10 Minute pro Intervall beträgt und insbesondere länger dauert als die Niederdruckbeaufschlagung. Die Länge der Druckbeaufschlagung, der dabei vorgesehene Maximaldruck sowie die Anzahl der Druckintervalle kann an das jeweilige Präparat durch Variation einer oder mehrerer dieser Parameter angepaßt werden.

Die Intervall-Druckbeaufschlagung für das Behandlungsgut kann über einen Zeitabschnitt von wenigen Sekunden, vorzugsweise von 3 Minuten bis zu 20 Stunden vorgenommen werden.
Diese extrem große Zeitspanne für eine intervallartige Druckluftbehandlung ergibt sich aus dem breiten Anwendungsgebiet für das erfindungsgemäße Verfahren für sehr unterschiedliche Präparate.
Somit wird der Zeitabschnitt der Intervall-Druckbeaufschlagung in-Abhängigkeit von dem zugeordneten Maximaldruck und/oder dem zu behandelnden Gut gewählt.

Zweckmäßig ist es, wenn dem Behandlungs-Behälter gefilterte und/oder gekühlte, atmosphärische Luft zugeführt wird.
Durch das Zuführen gekühlter Luft kann der Behälter für die Präparate oder dergleichen an praktisch jeder beliebigen Stelle angeordnet werden, also auch außerhalb eines Kühlraumes. Dazu trägt auch das Zuführen gefilterter Luft bei, weil auch dadurch der Standort des Behälters praktisch beliebig gewählt werden kann.

Durch das erfindungsgemäße Konservierungsverfahren stehen die damit behandelten Präparate - Ganzkörper- oder Teilpräparate - über einen vergleichsweise langen Zeitraum in einer etwa Frischpräparaten entsprechenden Konsistenz zur Verfügung.
Um bei Versuchen mit Tier- oder Menschenpräparaten möglichst lebensechte Verhältnisse zu schaffen, kann außer der durch das Konservieren erzielten Frischpräparat-Konsistenz als zusätzliche, wirklichkeitsnahe Maßnahme vorgesehen sein, daß das Blutgefäßsystem eines durch ein Teilpäparat oder einen Ganzkörper gebildeten Präparates nach dem Konservieren beim Durchführen von Untersuchungen, insbesondere bei Operationssimulationen, an eine Flüssigkeitsdurchspülung, insbesondere an einen künstlichen Blutkreislauf angeschlossen wird und daß dazu das Präparat oder dergleichen Behandlungsgut mit zumindest einem großen Blutgefäß an eine vorzugsweise pulsierende Flüssigkeitszufuhr angeschlossen wird, insbesondere mit zumindest einer großen Arterie und/oder wenigstens einer Vene.
Bei Operationssimulatinen an den Präparaten bewirkt diese Flüssigkeitszufuhr in die Blutgefäße, daß es während des Anschneidens des Präparats in wirklichkeitsnaher Weise aus kleineren Blutgefäßen sickert, während die Flüssigkeit aus den großen Blutgefäßen spritzt. In den Blutbahnen des Präparats wird somit ein wirklichkeitsnaher Blut- oder Flüssigkeitsstrom aufgebaut.
Das erfindungsgemäße Konservierungsverfahren ist besonders gut auch in Kombination mit der Methode der künstlichen Durchblutung einsetzbar, weil bei diesem Konservierungsverfahren insbesondere Farbe und Konsistenz der Gefäßwände der großen und besonders auch der kleinen Arterien und Venen auch nach längerer Konservierung erhaltenbleiben. Während einer Operationssimulation können somit, zum Beispiel durch einen falschen Schnitt, unerwartete Blutungen auftretenden, so wie dies bei tatsächlichen Operationen auch der Fall ist. Der Operateur sieht so direkt ein realistisches Ergebnis seiner Tätigkeit.
Dieser Fall kann somit besonders lebensecht simuliert werden, so daß damit auch die gesamte Operation dementsprechend lebensecht abläuft. Der Operateur kann so auch an schwierige Situationen herangeführt werden, um sie dann in der Praxis sicher zu beherrschen.

Zweckmäßig ist es, wenn das Blutgefäßsystem eines durch ein Teilpäparat oder einen Ganzkörper gebildeten Präparates oder eines zu transplantierenden Organes oder Körperteiles vor und/oder während und/oder nach dem Konservieren mit einer insbesondere gerinnungshemmenden Flüssigkeit oder mit einem Blutersatzstoff oder dergleichen durchspült wird.
Dieses Durchspülen des Blutbahnsystems kann an dem Präparat oder Organ beziehungsweise Körperteil direkt nach der Schlachtung des Tieres beziehungsweise nach der Entnahme des Organes oder dergleichen vorgenommen werden, um Restblut zu entfernen und einem Verkleben der Gefäße vorzubeugen. Dadurch bleibt das Blutbahnsystem durchgängig für anschließend bedarfsweise zugeführte Flüssigkeit.
Bei einem zu transplantierenden Organ oder Körperteil kann dieses vor und/oder während und/oder nach dem Konservieren an eine Flüssigkeitsdurchspülung, vorzugsweise an einen Blutkreislauf angeschlossen werden.

Vorteilhaft ist es , wenn ein Blutersatzstoff mit einem mit Blut vergleichbaren koloid-osmotischen Druck verwendet wird.
Dadurch kann das während des Präparierens in die Blutbahn des Präparats einfließende Blut oder dergleichen Flüssigkeit beim Anschneiden des Präparats unter möglichst wirklichkeitsnahen Bedingungen ausfließen.
Eine bevorzugte Ausführungsform der Erfindung sieht vor, daß der Blutersatzstoff oder dergleichen Flüssigkeit mittels einer an zumindest ein Blutgefäß angeschlossenen Druckpumpe in die Blutbahnen des Präparates eingefüllt wird.

Mit Hilfe des oben-beschriebenen erfindungsgemäßen BehandlungsVerfahrens kann an einem Präparat auch über einen vergleichsweise langen Zeitraum unter wirklichkeitsnahen Verhältnissen präpariert werden. Da das Präparat auch über einen längeren Zeitraum frischgehalten werden kann, können praktisch jederzeit auch größere Mengen dieser Präparate bevorratet und zur Verfügung gestellt werden.

Das erfindungsgemäße Verfahren eignet sich besonders gut für die Forschung und Ausbildung in der interventionellen Radiologie. Insbesondere ist es gut einsetzbar bei der Katheterisierung, Injektion und bei mikrochirurgischen Eingriffen unter Computertomographiekontrolle oder Magnetresonanztomographiekontrolle, da die lebensechte Erhaltung der Gewebestrukturen und die Möglichkeit der künstlichen Durchblutung auch kleiner Gefäße, realistische und lebensechte Aufnahmen (Computertomographiebilder oder Magnetresonanzbilder) liefert.
Es besteht auch die Möglichkeit, daß atmosphärische Luft verdichtet, mit einem Druck zwischen etwa 10 bar und etwa 1000 bar zwischengespeichert und dann dem Behälter vorzugsweise gefiltert und/oder gekühlt zugeführt wird.
Durch das Zwischenspeichern kann einerseits die durch das Verdichten erwärmte Luft zwischengespeichert und in dieser Zeit vor dem Zuführen in dem Behandlungsbehälter abkühlen. Dadurch ist der Kühlaufwand reduziert unter anderem, weil dafür auch mehr Zeit zur Verfügung steht.
Zweckmäßigerweise wird der Behandlungsgut-Behälter vorzugsweise durch eine gekühlte Umgebungsatmosphäre gekühlt, wobei die Zeitabschnitte mit einer intervallartigen Druckerhöhung und einer anschließenden Druckabsenkung im Behälter so bemessen sind, daß am Ende jedes Zeitabschnittes eine vorgebbare Temperatur im Behälter herrscht. Durch die stufenweise Erhöhung des Druckes und das nach jeder Erhöhung erfolgende, teilweise Absenken des Druckes wird einerseits das Druckniveau in erwünschter Weise an den vorgesehenen Enddruck angenähert und andererseits wird durch das Druckabsenken auch eine Reduzierung der durch das Druckaufbau-Intervall jeweils erhöhten Temperatur erreicht. Die Druckabsenkung erfolgt dabei im Anschluß an die Druckerhöhung, bevor eine merkbare Temperaturerhöhung im Behandlungsbehälter auftritt. Die jeweilige Druckabsenkung kann beispielsweise um etwa 1/3 der vorherigen Druckerhöhung erfolgen. In Versuchen hat sich gezeigt, daß dabei die Temperatur im Behandlungsbehälter sogar bis unter die Temperatur einer den Behandlungsbehälter umgebenden Kühlatmosphäre sinken kann. Die nächste Druckerhöhung erfolgt vorzugweise dann wieder, wenn sich etwa ein Temperaturgleichgewicht eingestellt hat, zum Beispiel nach 20 Sekunden.

Die zur Durchführung des erfindungsgemäßen Verfahrens vorgesehene Vorrichtung weist einen luftdicht verschließbaren Behälter zur Aufnahme des Behandlungsgutes aufweist, an den eine Gaszuleitung sowie eine Gasableitung angeschlossen sind.
Sie ist dadurch gekennzeichnet, daß an die Gaszuleitung ein Kompressor zum Zuführen von Umgebungsluft in den Behälter angeschlossen ist, daß ein Ablaßventil in der Gasableitung angeordnet ist, daß ein Drucksensor zum Messen des Behälterinnendrucks vorgesehen ist und daß der Kompressor, das Ablaßventil sowie der Drucksensor mit einer Steuereinrichtung zum intervallartigen Zuführen und Ablassen von Luft in Steuerverbindung stehen.

Insgesamt ist die erfindungsgemäße Vorrichtung einfach im Aufbau und aus kostengünstigen, handelsüblichen Einzelkomponenten zusammengesetzt. Mit dieser Vorrichtung kann die erfindungsgemäße Behandlung von Präparaten, Organen, Körperteilen und dergleichen durchgeführt werden, indem diese in den Druckbehälter eingegeben und anschließend bei geschlossenem Behälter intervallartig mit Luft beaufschlagt werden. Der an den Behälter angeschlossene Kompressor zur Drucklufterzeugung in Verbindung mit dem Ablaßventil sowie dem Drucksensor können nach einem an der Steuereinrichtung einstellbaren Ablaufprogramm arbeiten, so daß ein praktisch vollautomatischer Betrieb möglich ist.
Die Steuereinrichtung kann einen Programmspeicher beinhalten, in dem unterschiedliche Behandlungsprogamme abgelegt werden können, bei denen insbesondere das jeweils zu behandelnde Gut und/oder die zur Verfügung stehende Behandlungszeit berücksichtigt sind.

Bevorzugt ist in der Luftzuleitung, insbesondere nach dem Kompressor, ein Filter und/oder eine Kühleinrichtung vorgesehen. Unter Einbeziehung eines Filters und einer Kühleinrichtung bildet die Vorrichtung eine komplette Funktionseinheit, die praktisch an beliebigen Standorten aufgestellt werden kann.

Eine abgewandelte Ausführungsform der erfindungsgemäßen Vorrichtung sieht vor, daß als Druckluftquelle wenigstens ein Hochdruck-Speicherbehälter für einen Betriebsdruck von etwa 10 bar bis zu 1000 bar vorgesehen ist.
Durch Verwendung eines Hochdruck-Speicherbehälters besteht die Möglichkeit, die erfindungsgemäße Vorrichtung aus einer oder mehreren solcher Speicherbehälter zu betreiben, wobei dies auch abgesetzt von einer Befüllstation mit einem Kompressor erfolgen kann.
Andererseits besteht aber auch die Möglichkeit, daß der Hochdruck-Speicherbehälter an den Kompressor angeschlossen oder anschließbar und mit seinem Abgabeende über das Druckluftventil an den Behandlungs-Behälter angeschlossen ist. In diesem Fall dient der Hochdruck-Speicherbehälter (oder auch mehrere davon) als Zwischenbehälter. Dadurch braucht der Kompressor jeweils nur für den Befüllvorgang in Betrieb genommen zu werden und es nicht wie bei einem direkt an den Behandlungs-Behälter angeschlossenen Kompressor erforderlich, diesen laufend über die gesamte Behandlungsdauer in Betrieb zu halten.

Zweckmäßigerweise ist der Behandlungs-Behälter mit einer Kühleinrichtung verbunden und vorzugsweise in einer gekühlten Umgebungsatmosphäre angeordnet, insbesondere in einem Kühlraum. Das im Behandlungs-Behälter befindliche Behandlungsgut kann dadurch auf die jeweils gewünschte Temperatur gekühlt und bei dieser Temperatur gehalten werden, zum Beispiel bei etwa 4 °C. Außerdem wird durch die Kühlung auch bei einer vorgenommenen Druckerhöhung der dadurch bedingte Temperaturanstieg kompensiert.

Nachstehend ist die Erfindung mit ihren wesentlichen Einzelheiten anhand der Zeichnungen noch näher erläutert.

Es zeigt:
- Fig. 1: eine schematische Darstellung einer Vorrichtung zur Behandlung von Tier- und Menschenpräparaten, Organen und Körperteilen
- Fig. 2: eine schematische Darstellung einer erfindungsgemäßen Vorrichtung mit Hochdruck-Speicherbehältern als Zwischenbehälter,
- Fig. 3: eine etwa Fig. 2 entsprechende Darstellung, hier jedoch mit einer Kühleinrichtung zwischen Hochdruck-Speicherbehältern und Behandlungsgut-Behälter,
- Fig. 4: eine schematische Darstellung einer erfindungsgemäßen Vorrichtung, bei der ein Kompressor mit einer Füllstation für Hochdruck-Speicherbehälter verbunden ist und wobei mehrere Bearbeitungseinheiten mit jeweils einem Behandlungsgut-Behälter voneinander räumlich abgesetzt sind, und
- Fig. 5 bis 7: Diagramme mit den Verläufen von Druck und Temperatur innerhalb eines Behandlungsbehälters während des Füllvorganges, des Bearbeitungsvorganges und des Entlüftungsvorganges.

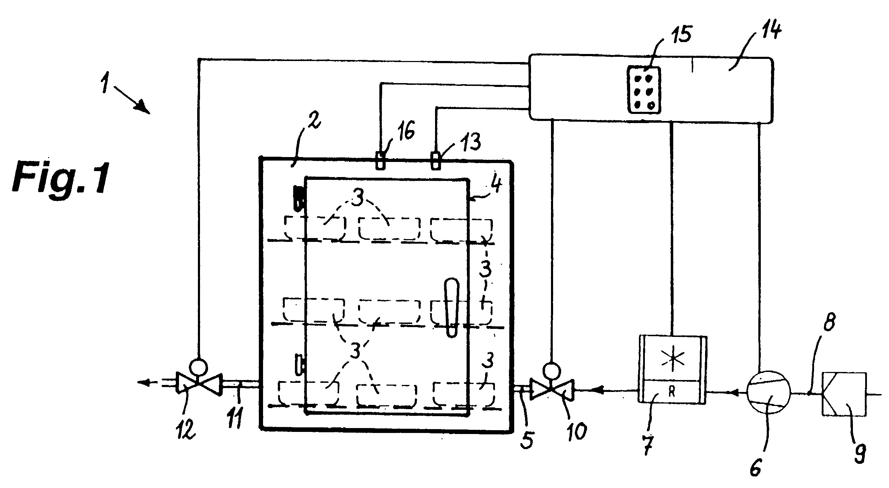

In der Figur 1 sind die wesentlichen Funktionsbaugruppen der erfindungsgemäßen Vorrichtung 1 schematisch dargestellt. Sie weist einen luftdicht verschließbaren Behälter 2 auf, in dem das strichliniert angedeutete Behandlungsgut 3 eingefüllt werden kann. Bei dem Behandlungsgut handelt es sich insbesondere um Tier- oder Menschenpräparate, Organe oder Körperteile.
Der in seiner äußeren Form beliebig ausgebildete Behälter 2 weist eine Tür 4 auf, über die der Innenraum des Behälters 2 zugänglich ist und mittels der der Behälter auch nach dem Bestücken mit Behandlungsgut 3 luftdicht verschließbar ist.
An den Behälter 2 ist eine Luftzuleitung 5 angeschlossen, die zumindest mit einem Kompressor 6 verbunden ist. Bevorzugt ist in die Luftzuleitung 5 ein Kühlaggregat 7 eingesetzt, das insbesondere zwischen Kompressor 6 und dem Behälter 2 angeordnet ist. Die von dem Luft-Kompressor 6 über eine Saugleitung 8 angesaugte Luft wird zuvor vorzugsweise über ein Luftfilter 9 geführt.
In der Luftzuleitung 5 befindet sich insbesondere unmittelbar vor dem Behälter 2 noch ein Druckluftventil 10.
An den Behälter 2 ist weiterhin eine Luftableitung 11 angeschlossen, in der sich ein Ablaßventil 12 befindet.
Ein Drucksensor 13 dient zur Messung des im Behälter 2 herrschenden Luftdruckes und mit einem Temperatursensor 16 kann die Temperatur im Behälter gemessen werden.

Die Ventile 10 und 12, der Drucksensor 13 und der Temperatursensor 16 sowie der Kompressor 6 und das Kühlaggregat 7 sind mit einer Steuereinrichtung 14 verbunden, mittels der das erfindungsgemäße Behandlungsverfahren automatisch gesteuert wird. Insbesondere kann über ein Bedienfeld 15 ein bestimmtes Ablaufprogramm vorgegeben werden. Dadurch ist eine Anpassung an unterschiedliche Behandlungsgüter und andere Vorgaben möglich.

Über die Steuereinrichtung 14 wird nach dem Bestücken des Behälters 2 mit Behandlungsgut 3 und nach dem luftdichten Verschließen der Tür 4 und der Luftableitung 11 mit Hilfe des Ablaßventiles 12, der Kompressor 6 eingeschaltet, so daß im vorliegenden Falle mit Hilfe des Kühlaggregates 7 gekühlte Luft über die Luftzuleitung 5 ins Behälterinnere geführt wird. Es erfolgt dabei ein Druckaufbau bis zu einem Behälterinnendruck, der mindestens 10 bar beträgt.
Ist der voreinstellbare Druck erreicht, so wird dies vom Drucksensor 13 erfaßt und über die Steuereinrichtung 14 erfolgt ein Abschalten des Kompressors 6. In dieser Hochdruckphase wird die Luftzuleitung 5 mit Hilfe des Druckluftventiles 10 geschlossen.
Nach einer ebenfalls vorgebaren Zeit wird das Ablaßventil 12 von der Steuerung 14 geöffnet, bis der Luftdruck im Inneren des Behälters 2 auf einen vorgebaren, vom Drucksensor 13 erfaßten Wert abgesenkt ist. Dieser gegenüber dem zuvor herrschenden Hochdruck abgesenkte Druck kann zwischen dem atmosphären Druck und dem zuvor herrschenden Hochdruck liegen, bevorzugt ist jedoch vorgesehen, daß bis auf Atmosphärendruck abgesenkt wird. Anschließend wird das Ablaßventil 12 wieder geschlossen, das Druckluftventil 10 geöffnet und über den Kompressor 6 wieder Druckluft zugeführt, bis ein bestimmter Druck in dem Behälter 2 erreicht ist, der wiederum mindestens 10 bar beträgt.
Die intervallartige Druckbeaufschlagung mit dazwischen jeweils liegender Druckentlastung kann je nach Behandlungsgut in ihrer Anzahl variiert werden.

Mit Hilfe des Temperatursensors 16 kann die über das Kühlaggregat 7 zugeführte, gekühlte Druckluft in einem vorgebaren Temperaturbereich gehalten werden.
Bevorzugt wird dabei die Temperatur in einem Bereich um 0 °C gehalten, weil bei dieser Temperaur ein besonders guter Austausch von Kohlendioxid und Sauerstoff innerhalb des Behandlungsgutes stattfindet. Außerdem wird bei dieser Temperatur die bakterielle Zersetzung minimiert.

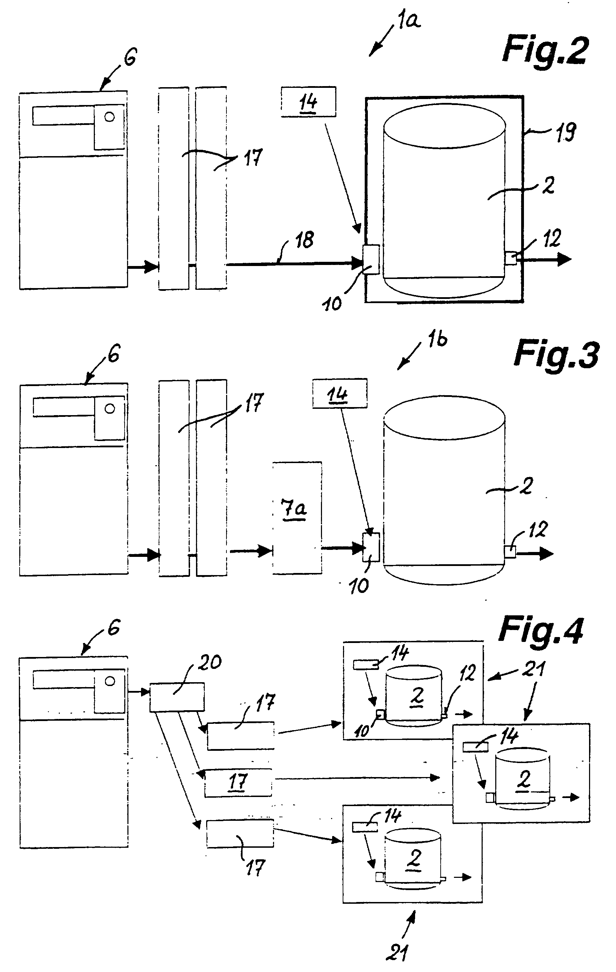

Fig. 2 zeigt eine Ausführungsvariante einer erfindungsgemäßen Vorrichtung 1a, bei der zwischen dem Kompressor 6 und dem Behandlungs-Behälter 2 Hochdruck-Speicherbehälter 17 angeordnet sind. Im Ausführungsbeispiel sind zwei dieser Hochdruckspeicherbehälter 17 dargestellt, wobei die Anzahl der Speicherbehälter je nach den Anforderungen und den Platzverhältnissen variiert werden kann. Anstatt mehrerer kleiner Speicherbehälter kann auch ein entsprechend größerer eingesetzt werden.
Mit Hilfe des Kompressors 6 werden die Hochdruck-Speicherbehälter 17 mit Druckluft gefüllt, wobei der Fülldruck im Bereich von zum Beispiel 50 bis 1000 bar liegen kann. Üblicherweise beträgt der Fülldruck etwa 300 bar, weil für diese Drücke handelsübliche Speicherbehälter 17 verwendet werden können.
Der oder die Hochdruck-Speicherbehäler 17 sind über eine Druckluftleitung 18 und das eingangsseitig des Behandlungs-Behälters 2 angeordnete Druckluftventil 10 mit dem Behälter 2 verbunden.
Bei den als Druckluft-Zwischenspeichern dienenden Speicherbehältern 17 kann noch ein hier nicht dargestelltes Druckreduzierventil angeordnet sein, so daß über die Druckluftleitung 18 Druckluft mit einem vom Innendruck der Speicherbehälter weitgehend unabhängigen, konstanten Druck dem Behälter 2 zugeführt werden kann.
Der Behandlungs-Behälter 2 befindet sich in dem in Fig. 2 gezeigten Ausführungsbeispiel innerhalb eines Kühlraumes 19, um die Innentemperatur des Behälters 2 beispielsweise bei etwa 4 °C halten zu können.
Die Verwendung von Hochdruck-Speicherbehältern 17 hat unter anderem den Vorteil, daß der Kompressor nur jeweils zum Befüllen der Speicherbehälter 17 betrieben werden muß und, so lange der Druckvorrat in diesen Speicherbehältern ausreicht, außer Betrieb ist.

Bei der Inbetriebnahme der Vorrichtung 1a herrscht zunächst in dem Behandlungs-Behälter 2 atmosphärischer Druck und das Behandlungsgut 3 wird in diesen Behälter 2 eingelagert. Die Umgebungsatmosphäre innerhalb des Behälters 2 hat dabei eine Temperatur von etwa 4 °C oder weniger. Bei geschlossenem Ablaßventil 12 beginnt dann der Füllvorgang, bei dem der Innendruck des Behälters 2 intervallartig mit Anstiegs- und Absenkphasen bis zu einem vorgebbaren Enddruck, beispielsweise 20 bar erhöht wird.

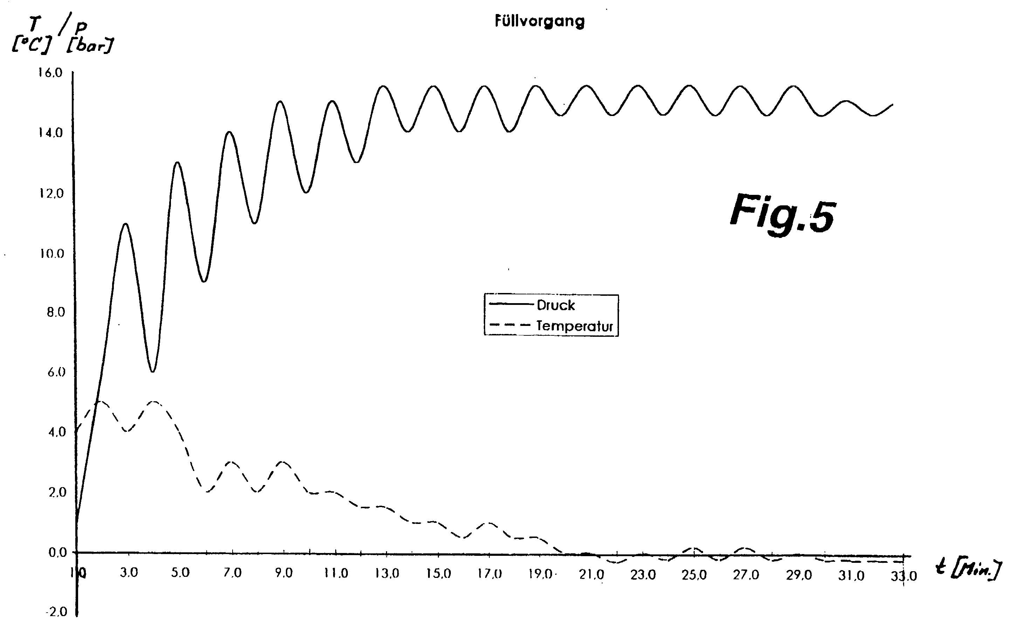

Fig. 5 zeigt ein Diagramm, in dem einerseits der Druckverlauf innerhalb des Behälters 2 während des Füllvorganges und andererseits der strichlinierte Temperaturverlauf der Innenatmosphäre des Behälters eingezeichnet sind. In diesem Ausführungsbeispiel steigt der Druck von atmosphärem Druck bis auf 15 bar an, und der Temperaturverlauf bewegt sich etwa zwischen 5 °C und 0 °C.

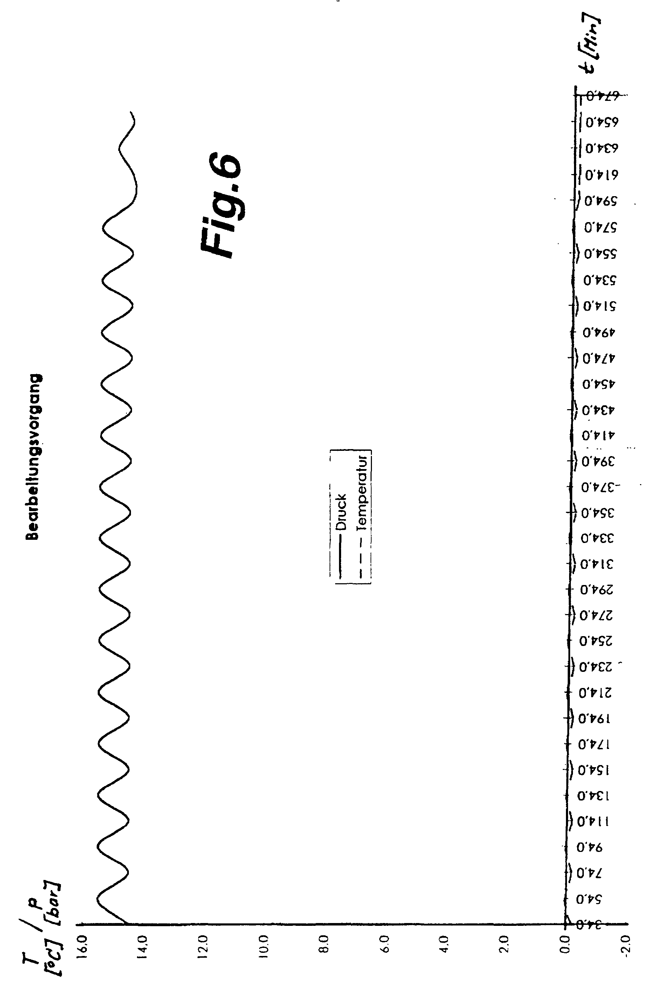

Ausgehend von atmosphärem Druck im Behälter 2 wird zunächst in einem ersten Intervall der Druck erhöht, wobei die Druckerhöhung 10 bar betragen kann. Diese Druckerhöhung bedingt auch einen Temperaturanstieg im Behälterinneren, der aber durch eine nachfolgende Druckabsenkung um etwa 1/3 bis 1/2 der vorher vorgenommenen Druckerhöhung zusammen mit der Kühlung des Behälters 2 kompensiert wird. Befindet sich das Temperaturniveau nach der Druckabsenkung und einem sich daran gegebenenfalls anschließenden Zeitabschnitt im zulässigen Bereich, erfolgt die nächste Druckerhöhung mit anschließender Druckabsenkung um einen Teilbetrag, jeweils unter Beobachtung der Behältertemperatur. Versuche haben ergeben, daß sich durch das Druckabsenken trotz des insgesamt erhöhten Druckniveaus kurzfristig Temperaturen unterhalb der durch die Kühlung vorgegebenen Temperatur ergeben können.
Die Intervalle mit Druckanstieg und Druckabsenkung werden so lange wiederholt, bis das gewünschte Druckniveau von beispielsweise 15 bar erreicht ist. In der Praxis ist dies beispielsweise nach etwa 5 bis 10 Minuten der Fall.
Dieser Betriebszustand bleibt dann über die Behandlungszeit des Behandlungsgutes 3 erhalten. In dem Diagramm gemäß Fig. 6 ist erkennbar, daß der Druck intervallartig variiert wird, während die Temperatur konstant bei etwa 0 °C gehalten wird.

Währen der Behandlungszeit kann ein teilweiser Luftaustausch vorgenommen werden, indem etwas Luft abgelassen und danach wieder Druckluft zugeführt wird. Dieser, im geringeren Umfang stattfindende Luftaustausch kann in kürzeren Zeitabständen vorgenommen werden, während in etwas größeren Zeitabständen, beispielsweise in Stundenabständen, der Luftaustausch auch in etwas größerem Umfang vorgenommen werden kann. Dabei ist auch ein teilweiser oder gegebenenfalls sogar ein vollständiger Luftaustausch im Behandlungsbehälter möglich.

Nach der Behandlungszeit, nach der das Behandlungsgut 3 aus dem Behälter 2 entnommen wird, erfolgt eine Druckabsenkung, wobei sich diese über einen Zeitabschnitt von beispielsweise etwa einer halben Stunde erstrecken kann. Die vergleichsweise langsame Druckabsenkung erfolgt, damit durch die Druckabsenkung eine zu starke Temperaturabsenkung vermieden wird.

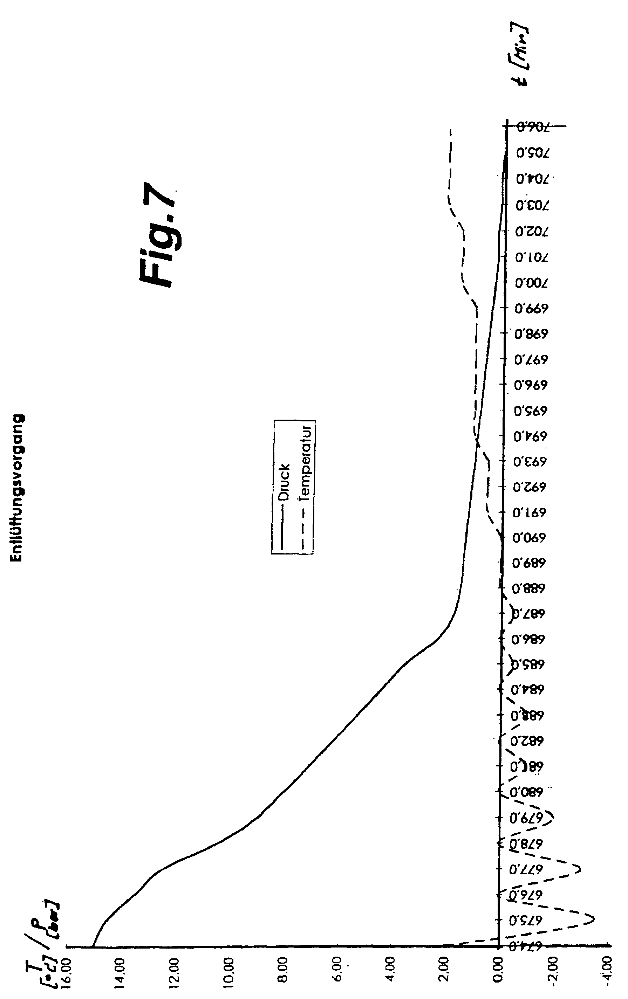

Fig. 7 zeigt den Entlüftungsvorgang, wo der Druck über einen Zeitabschnitt von etwa einer halben Stunde von etwa 15 bar auf atmosphären Druck abgesenkt wird.

Fig. 3 zeigt eine weitere Variante der erfindungsgemäßen Vorrichtung 1b, bei der sich der Behandlungs-Behälter 2 nicht in einem Kühlraum wie gemäß Fig. 2 befindet. Es ist deshalb dem Speicherbehältern 17 eine Kühleinrichtung 7a nachgeschaltet, so daß dem Behälter 2 soweit heruntergekühlte Luft zugeführt werden kann, daß die im Behälter gewünschte Temperatur vorhanden ist.

Bei der Ausführungsvariante gemäß Fig. 4 ist ein Kompressor 6 mit einer Füllstation 20 mehreren Bearbeitungseinheiten 21 jeweils mit einem Behälter 2, einem Druckluftventil 10, einem Ablaßventil 12 sowie einer Steuerung 14 zugeordnet. Die Bearbeitungseinheiten 21 können räumlich getrennt vom Kompressor 6 angeordnet sein. An jede Bearbeitungseinheit 21 ist jeweils wenigstens ein mobiler Hochdruck-Speicherbehälter 17 anschließbar. Dieser kann bei der zentralen Füllstation 20, an die der Kompressor 6 angeschlossen ist, befüllt werden und wird anschließend wieder an die jeweilige Bearbeitungseinheit angeschlossen. Damit ist nur eine einzige Füllstation mit Kompressor erforderlich, über die mehrere Bearbeitungseinheiten 21 versorgt werden können.

## Patentansprüche

1. Verfahren zur Konservierung von Tier- und Menschenpräparaten sowie Mikroorganismen oder dergleichen Behandlungsgut, insbesondere für die medizinische Forschung und/oder Ausbildung und zur Verlängerung der Lebensfähigkeit von zu transplantierenden Organen und Körperteilen als Behandlungsgut, wobei aus den Zellen des Behandlungsgutes Kohlendioxid verdrängt wird, **dadurch gekennzeichnet, daß** das Behandlungsgut innerhalb eines Behälters atmosphärischer Luft mit intervallartig bis wenigstens etwa 10 bar ansteigendem und anschließend nach einem vorgebbaren, je nach dem Behandlungsgut angepaßtem Zeitabschnitt abgesenktem Druck ausgesetzt wird, daß nach dem Absenken des Drucks von außen Luft zugeführt und der Druck bis auf wenigstens etwa 10 bar erhöht wird und daß wenigstens zwei Druckphasen für eine Behandlung vorgesehen sind.

2. Verfahren nach Anspruch 1, **dadurch gekennzeichnet, daß** die Intervallbehandlung mit wechselnder Druckbeaufschlagung des Behandlungsgutes bei einem Maximaldruck, der in einem Bereich von etwa 10 bar bis etwa 100 bar liegt, vorgenommen wird.

3. Verfahren nach Anspruch 1 oder 2, **dadurch gekennzeichnet, daß** die Druckbeaufschlagung des Behandlungsgutes einerseits mit- hoher und andererseits mit demgegenüber reduzierter Druckbeaufschlagung in unterschiedlich langen Zeitabschnitten vorgenommen wird und daß die Hochdruckbeaufschlagung mindestens etwa 1 Minute pro Intervall beträgt und insbesondere länger dauert als die Niederdruckbeaufschlagung.

4. Verfahren nach einem der Ansprüche 1 bis 3, **dadurch gekennzeichnet, daß** die Druckentlastung von der Hochdruckbeaufschlagung auf Atmosphärendruck erfolgt.

5. Verfahren nach einem der Ansprüche 1 bis 4, **dadurch gekennzeichnet, daß** die Intervall-Druckbeaufschlagung für eine Behandlungsgutportion über einen Zeitabschnitt von wenigen Sekunden, vorzugsweise von drei Minuten bis zu zwanzig Stunden vorgenommen wird.

6. Verfahren nach einem der Ansprüche 1 bis 5, **dadurch gekennzeichnet, daß** der Zeitabschnitt der Intervall-Druckbeaufschlagung in Abhängigkeit von dem zugeordneten Maximaldruck und/oder dem zu behandelndem Gut gewählt wird.

7. Verfahren nach einem der Ansprüche 1 bis 6, **dadurch gekennzeichnet, daß** dem Behälter gefilterte und/oder gekühlte, atmosphärische Luft zugeführt wird.

8. Verfahren nach einem der Ansprüche 1 bis 7, **dadurch gekennzeichnet, daß** das Blutgefäßsystem eines durch ein Teilpäparat oder einen Ganzkörper gebildeten Präparates oder eines zu transplantierenden Organes oder Körperteiles vor und/oder während und/oder nach dem Konservieren mit einer insbesondere gerinnungshemmenden Flüssigkeit oder mit einem Blutersatzstoff oder dergleichen durchspült wird.

9. Verfahren nach einem der Ansprüche 1 bis 8, **dadurch gekennzeichnet, daß** ein zu transplantierendes Organ oder Körperteil vor und/oder während und/oder nach dem Konservieren an eine Flüssigkeitsdurchspülung, vorzugsweise an einen künstlichen Blutkreislauf angeschlossen wird.

10. Verfahren nach einem der Ansprüche 1 bis 8, **dadurch gekennzeichnet, daß** das Blutgefäßsystem eines durch ein Teilpäparat oder einen Ganzkörper gebildeten Präparates nach dem Konservieren beim Durchführen von Untersuchungen, insbesondere bei Operationssimulationen, an eine Flüssigkeitsdurchspülung, insbesondere an einen künstlichen Blutkreislauf angeschlossen wird und daß dazu das Präparat oder dergleichen Behandlungsgut mit zumindest einem großen Blutgefäß an eine vorzugsweise pulsierende Flüssigkeitszufuhr angeschlossen wird, insbesondere mit zumindest einer großen Arterie und/oder wenigstens einer Vene.

11. Verfahren nach Anspruch 8 oder 10, **dadurch gekennzeichnet, daß** in die Blutbahnen des Präparates oder dergleichen ein Blutersatzstoff mit einem mit Blut vergleichbaren koloidosmotischen Druck eingefüllt wird.

12. Verfahren nach Anspruch 11, **dadurch gekennzeichnet, daß** der Blutersatzstoff oder dergleichen Flüssigkeit mittels einer an zumindest ein Blutgefäß angeschlossene Druckpumpe in die Blutbahnen des Präparates eingefüllt wird.

13. Verfahren nach einem der Ansprüche 1 bis 12, **dadurch gekennzeichnet, daß** atmosphärische Luft verdichtet und dann dem Behälter (2) gefiltert und/oder gekühlt zugeführt wird.

14. Verfahren nach einem der Ansprüche 1 bis 12, **dadurch gekennzeichnet, daß** atmosphärische Luft verdichtet, mit einem Druck zwischen etwa 10 bar und etwa 1000 bar zwischengespeichert und dann dem Behälter (2) vorzugsweise gefiltert und/oder gekühlt zugeführt wird.

15. Verfahren nach einem der Ansprüche 1 bis 14, **dadurch gekennzeichnet, daß** die Behandlung des Behandlungsgutes in einer gekühlten Umgebungsathmosphäre etwa zwischen -2°C und +5°C vorgenommen wird.

16. Verfahren nach einem der Ansprüche 1 bis 15, **dadurch gekennzeichnet, daß** der Behandlungsgut-Behälter (2) vorzugsweise durch eine gekühlte Umgebungsatmosphäre gekühlt wird und daß die Zeitabschnitte mit einer intervallartigen Druckerhöhung und einer anschließenden Druckabsenkung im Behälter (2) so bemessen werden, daß am Ende jedes Zeitabschnittes eine vorgebbare Temperatur im Behälter (2) herrscht.

17. Vorrichtung zur Konservierung von Tier- und Menschenpräparaten sowie Mikroorganismen oder dergleichen Behandlungsgut und zur Verlängerung der Lebensfähigkeit von zu transplantierenden Organen und Körperteilen als Behandlungsgut, wobei die Vorrichtung wenigstens einen luftdicht verschließbaren Behälter zur Aufnahme des Behandlungsgutes aufweist, an den eine Gaszuleitung sowie eine Gasableitung angeschlossen sind, zur Durchführung des Verfahrens nach einem der Ansprüche 1 bis 16, **dadurch gekennzeichnet, daß** an die Gaszuleitung (5) ein Kompressor (6) zum Zuführen von Umgebungsluft in den Behälter (2) angeschlossen ist, daß ein Ablaßventil (12) in der Gasableitung (11) angeordnet ist, daß ein Drucksensor (13) zum Messen des Behälterinnendrucks vorgesehen ist und daß der Kompressor (6), das Ablaßventil (12) sowie der Drucksensor (13) mit einer Steuereinrichtung (14) zum intervallartigen Zuführen und Ablassen von Luft in Steuerverbindung stehen.

18. Vorrichtung nach Anspruch 17, **dadurch gekennzeichnet, daß** in der Gas-beziehungsweise Luftzuleitung (5), insbesondere nach dem Kompressor (6), ein Filter (9) und/oder eine Kühleinrichtung (7) vorgesehen ist.

19. Vorrichtung nach einem der Ansprüche 17 bis 18, **dadurch gekennzeichnet, daß** als Druckluftquelle wenigstens ein Hochdruck-Speicherbehälter (17) für einen Betriebsdruck von etwa 10 bar bis zu 1000 bar vorgesehen ist.

20. Vorrichtung nach Anspruch 19, **dadurch gekennzeichnet, daß** der Hochdruck-Speicherbehälter (17) an den Kompressor (6) angeschlossen oder anschließbar und andererseits über das Druckluftventil (10) an den Behandlungs-Behälter (2) angeschlossen ist.

21. Vorrichtung nach einem der Ansprüche 19 bis 20, **dadurch gekennzeichnet, daß** der Behandlungs-Behälter (2) mit einer Kühleinrichtung verbunden und vorzugsweise in einer gekühlten Umgebungsatmosphäre angeordnet ist, insbesondere in einem Kühlraum (19).

22. Vorrichtung nach Anspruch 21, **dadurch gekennzeichnet, daß** der Behandlungs-Behälter (2) mit einem Kühlmantel als Kühleinrichtung versehen ist.

23. Vorrichtung nach einem der Ansprüche 19 bis 22, **dadurch gekennzeichnet, daß** der Hochdruck-Speicherbehälter (17) in einer gekühlten Umgebungsatmosphäre angeordnet ist, insbesondere in einem Kühlraum (17).

## Claims

1. Process for preserving animal and human specimens or preparations and microorganisms or similar materials for treatment, particularly for medical research and/or training and for extending the viability of organs and body parts for transplantation as materials for treatment, in which carbon dioxide is expelled from the cells of the material for treatment, **characterised in that** the material for treatment is exposed to atmospheric air inside a container with the pressure intermittently rising to at least 10 bar and then falling, after a predetermined length of time adapted to the material being treated, **in that** after the pressure has fallen air is supplied from outside and the pressure is increased to at least about 10 bar and at least two pressure phases are provided for one treatment.

2. Process according to claim 1, **characterised in that** the intermittent treatment with alternating application of pressure to the material for treatment is carried out at a maximum pressure in the range from about 10 bar to about 100 bar.

3. Process according to claim 1 or 2, **characterised in that** the application of pressure to the material for treatment is carried out on the one hand at high pressure and on the other hand at a reduced pressure level for different lengths of time, the high pressure being applied for at least about 1 minute each time and, in particular, lasting longer than the low pressure treatment.

4. Process according to one of claims 1 to 3, **characterised in that** the pressure is reduced from the high pressure treatment down to atmospheric pressure.

5. Process according to one of claims 1 to 4, **characterised in that** the intermittent application of pressure to a portion of material for treatment is carried out over a period ranging from a few seconds, preferably from 3 minutes, up to 20 hours.

6. Process according to one of claims 1 to 5, **characterised in that** the duration of the intermittent application of pressure is selected in accordance with the associated maximum pressure and/or the particular material to be treated.

7. Process according to one of claims 1 to 6, **characterised in that** filtered and/or cooled atmospheric air is supplied to the container.

8. Process according to one of claims 1 to 7, **characterised in that** the vascular system of a preparation formed by a partial or whole-body specimen or of an organ or body part which is to be transplanted is flushed through before and/or during and/or after the preservation with an anticoagulant liquid, in particular, or with a blood substitute or the like.

9. Process according to one of claims 1 to 8, **characterised in that** an organ or body part to be transplanted is attached to a circulation of flushing liquid, preferably to an artificial blood circulation, before and/or during and/or after the preservation.

10. Process according to one of claims 1 to 8, **characterised in that** the vascular system of a preparation formed by a partial or whole-body specimen is attached to a circulation of flushing liquid, preferably to an artificial blood circulation, after preservation when performing investigations, particularly when simulating operations, and for this purpose the preparation or similar material for treatment is connected to a preferably pulsating supply of liquid, by at least one large blood vessel, particularly by at least one large artery and/or at least one vein.

11. Process according to claim 8 or 10, **characterised in that** a blood substitute is introduced into the vascular system of the preparation or the like at a colloid-osmotic pressure comparable to that of blood.

12. Process according to claim 11, **characterised in that** blood substitute or similar liquid is introduced into the vascular system of the preparation by means of a pressure pump connected to at least one blood vessel.

13. Process according to one of claims 1 to 12, **characterised in that** atmospheric air is compressed and then supplied to the container (2) having been filtered and/or cooled.

14. Process according to one of claims 1 to 12, **characterised in that** atmospheric air is compressed, stored at a pressure of between about 10 bar and about 1000 bar and then supplied to the container (2) preferably having been filtered and/or cooled.

15. Process according to one of claims 1 to 14, **characterised in that** the treatment of the material for treatment is carried out in a cooled ambient atmosphere at between about -2°C and +5°C.

16. Process according to one of claims 1 to 15, **characterised in that** the container (2) holding the material for treatment is preferably cooled by a refrigerated ambient atmosphere and the periods of intermittent pressure increase followed by reductions in pressure in the container (2) are designed so that at the end of each period there is a predetermined temperature prevailing in the container (2).

17. Apparatus for preserving animal and human preparations and microorganisms or similar materials for treatment and for extending the viability of organs and body parts for transplantation as materials for treatment, the apparatus having at least one container for holding the material for treatment, which can be sealed off in air-tight manner and to which are connected a gas supply line and a gas exhaust line, for carrying out the process according to one of claims 1 to 16, **characterised in that** attached to the gas supply line (5) is a compressor (6) for supplying ambient air to the container (2), **in that** an outlet valve (12) is provided in the gas exhaust line (11), **in that** a pressure sensor (13) is provided for measuring the internal pressure of the container and **in that** the compressor (6), the outlet valve (12) and the pressure sensor (13) are connected to control means (14) for intermittently supplying and discharging air.

18. Apparatus according to claim 17, **characterised in that** a filter (9) and/or a refrigerating device (7) is provided in the gas or air supply line (5), particularly after the compressor (6).

19. Apparatus according to one of claims 17 to 18, **characterised in that** at least one high pressure storage container (17) is provided as the compressed air source for an operating pressure of about 10 bar to 1000 bar.

20. Apparatus according to claim 19, **characterised in that** the high pressure storage container (17) is connected or connectable to the compressor and on the other hand is connected to the treatment container (2) via the compressed air valve (10).

21. Apparatus according to one of claims 19 to 20, **characterised in that** the treatment container (2) is connected to cooling means and is preferably located in a refrigerated ambient atmosphere, particularly in a coldroom (19).

22. Apparatus according to claim 21, **characterised in that** the treatment container (2) is provided with a cooling jacket as the cooling means.

23. Apparatus according to one of claims 19 to 22, **characterised in that** the high pressure storage container (17) is located in a refrigerated ambient atmosphere, particularly in a coldroom (17).

## Revendications

1. Procédé pour conserver des préparations animales et humaines et des micro-organismes ou des produits de traitement analogues, notamment pour la recherche et/ou la formation médicale, et pour prolonger la longévité d'organes et d'éléments organiques à transplanter en tant que produits à traiter, sachant que l'on évacue le dioxyde de carbone des cellules du produit à traiter, **caractérisé en ce que** le produit à traiter est exposé dans un récipient à de l'air atmosphérique dont la pression monte par intermittence jusqu'à environ 10 bars au moins, puis redescend après un temps prédéfini adapté à la nature du produit à traiter, **en ce qu'**après l'abaissement de la pression, de l'air est amené de l'extérieur et la pression est à nouveau portée à environ 10 bars au moins, et **en ce qu'**au moins deux phases de pression sont prévues pour un traitement.

2. Procédé selon la revendication 1, **caractérisé en ce que** l'on procède au traitement par intermittence du produit en le soumettant à une pression variable dont la valeur maximale est environ comprise entre 10 et 100 bars.

3. Procédé selon la revendication 1 ou 2, **caractérisé en ce que** la mise sous pression du produit à traiter s'effectue, d'une part, à une pression élevée et, d'autre part, à une pression réduite par rapport à la précédente sur des périodes de temps de différentes durées, et **en ce que** l'exposition à la haute pression dure à chaque fois au moins 1 minute environ et dure notamment plus longtemps que l'exposition à la basse pression.

4. Procédé selon l'une des revendications 1 à 3, **caractérisé en ce que** la décompression consiste à passer de la haute pression à la pression atmosphérique.

5. Procédé selon l'une des revendications 1 à 4, **caractérisé en ce qu'**une partie du produit à traiter est mise sous pression par intermittence pendant quelques secondes, de préférence sur une durée comprise entre trois minutes et vingt heures.

6. Procédé selon l'une des revendications 1 à 5, **caractérisé en ce que** l'on choisit la durée de la mise sous pression par intermittence en fonction de la pression maximale associée et/ou du produit à traiter.

7. Procédé selon l'une des revendications 1 à 6, **caractérisé en ce que** le récipient est alimenté par de l'air atmosphérique est filtré et/ou refroidi.

8. Procédé selon l'une des revendications 1 à 7, **caractérisé en ce que** l'on fait circuler dans le système circulatoire sanguin d'une préparation constituée d'une partie de préparation ou d'un élément entier ou d'un organe ou d'une partie du corps à transplanter, avant et/ou pendant et/ou après la conservation, un liquide notamment anticoagulant ou un succédané du sang ou analogue.

9. Procédé selon l'une des revendications 1 à 8, **caractérisé en ce qu'**un organe ou une partie du corps à transplanter est relié(e) avant et/ou pendant et/ou après la conservation à un appareil faisant circuler un liquide, notamment à un appareil recréant une circulation sanguine artificielle.

10. Procédé selon l'une des revendications 1 à 8, **caractérisé en ce qu'**après la conservation, lors de la pratique d'examens, notamment lors de simulations d'opérations, le système circulatoire sanguin d'une préparation constituée d'une partie de préparation ou d'un élément entier est relié à un appareil faisant circuler un liquide, notamment à un appareil recréant une circulation sanguine artificielle, et **en ce que**, pour ce faire, la préparation ou un produit à traiter analogue est relié(e) par au moins un vaisseau principal, notamment une artère principale et/ou au moins une veine, à une amenée de liquide de préférence pulsante.

11. Procédé selon la revendication 8 ou 10, **caractérisé en ce que** les voies sanguines de la préparation ou analogue sont remplies d'un succédané de sang à une pression colloïdo-osmotique comparable à celle du sang.

12. Procédé selon la revendication 11, **caractérisé en ce que** le succédané de sang ou un liquide analogue est introduit dans les voies sanguines de la préparation au moyen d'une pompe à poussoir reliée à au moins un vaisseau sanguin.

13. Procédé selon l'une des revendications 1 à 12, **caractérisé en ce que** de l'air atmosphérique est comprimé, puis acheminé dans le récipient (2) une fois filtré et/ou refroidi.

14. Procédé selon l'une des revendications 1 à 12, **caractérisé en ce que** de l'air atmosphérique est comprimé, stocké temporairement à une pression comprise entre 10 et 1000 bars environ, puis acheminé dans le récipient (2) de préférence après avoir été filtré et/ou refroidi.

15. Procédé selon l'une des revendications 1 à 14, **caractérisé en ce que** le produit est traité dans une ambiance réfrigérée à une température comprise environ entre -2° C et +5° C.

16. Procédé selon l'une des revendications 1 à 15, **caractérisé en ce que** le récipient (2) contenant le produit à traiter est de préférence refroidi par une ambiance réfrigérée, et **en ce que** la durée d'une période d'augmentation de la pression suivie d'une baisse de la pression dans le récipient (2) est calculée de telle sorte qu'à la fin de chaque période, il règne dans le récipient (2) une température donnée.

17. Dispositif pour conserver des préparations animales et humaines et des micro-organismes ou des produits de traitement analogues et pour prolonger la longévité d'organes et d'éléments organiques à transplanter en tant que produits à traiter, sachant que le dispositif comprend au moins un récipient pouvant être hermétiquement fermé destiné à contenir le produit à traiter, auquel sont raccordées une conduite d'arrivée de gaz et une conduite d'évacuation de gaz, lequel dispositif est destiné à mettre en oeuvre le procédé selon l'une des revendications 1 à 16, **caractérisé en ce qu'**un compresseur (6) est raccordé à l'arrivée de gaz (5) pour faire entrer de l'air ambiant dans le récipient (2), **en ce qu'**une soupape d'évacuation (12) est placée dans la conduite d'évacuation de gaz (11), **en ce qu'**un capteur de pression (13) est prévu pour mesurer la pression à l'intérieur du récipient, et **en ce que** le compresseur (6), la soupape d'évacuation (12) et le capteur de pression (13) sont reliés à un dispositif de commande (14) pour faire entrer et sortir de l'air par intermittence.

18. Dispositif selon la revendication 17, **caractérisé en ce qu'**un filtre (9) et/ou un dispositif réfrigérant (7) est prévu dans la conduite d'arrivée de gaz ou d'air (5), notamment après le compresseur (6).

19. Dispositif selon la revendication 17 ou 18, **caractérisé en ce qu'**est prévu en tant que source d'air comprimé au moins un réservoir de stockage à haute pression (17) pouvant fournir une pression de fonctionnement comprise entre 10 et 1000 bars environ.

20. Dispositif selon la revendication 19, **caractérisé en ce que** le réservoir de stockage à haute pression (17) est ou peut être relié au compresseur (6), et d'autre part est relié par l'intermédiaire de la soupape d'air comprimé (10) au récipient de traitement (2).

21. Dispositif selon la revendication 19 ou 20, **caractérisé en ce que** le récipient de traitement (2) est relié à un dispositif réfrigérant et est de préférence placé dans une ambiance réfrigérée, notamment dans une chambre froide (19).

22. Dispositif selon la revendication 21, **caractérisé en ce que** le récipient de traitement (2) est muni d'une enveloppe réfrigérante servant de dispositif réfrigérant.

23. Dispositif selon l'une des revendications 19 à 22, **caractérisé en ce que** le réservoir de stockage à haute pression (17) est placé dans une ambiance réfrigérée, notamment dans une chambre froide (19).
